# EUROPEAN PATENT APPLICATION

(11) **EP 4 180 765 A1**
(43) Date of publication of application: **17.05.2023**
(21) Application number: 22202441.6
(22) Date of filing: 19.10.2022
(51) Int. Cl.: G01C 21/00, G08G 1/01, G01C 21/34

(54) **HIGH-PRECISION-MAP DATA COLLECTION METHOD AND SYSTEM**

(30) Priority: 11.11.2021 CN 202111334511
(71) Applicant: Apollo Intelligent Driving Technology (Beijing) Co., Ltd., Haidian District Beijing 100085 (CN)
(72) Inventor: LIANG, Tao, Beijing, 100085 (CN); HUANG, Jie, Beijing, 100085 (CN)
(74) Representative: dompatent von Kreisler Selting Werner - Partnerschaft von Patent- und Rechtsanwälten mbB

(57) **Abstract**

The present disclosure provides a high-precision-map data collection method and system, and relates to the field of computer technologies, and particularly to the fields of big data technologies, autonomous driving technologies, intelligent transportation technologies, or the like. The data collection method includes: receiving a collection task generated by a server, where the collection task includes to-be-collected track points; generating a navigation path based on the to-be-collected track points, and displaying the navigation path; and acquiring map data collected at the to-be-collected track points when a vehicle travels based on the navigation path. The present disclosure may improve a data collection efficiency.

## Description

### TECHNICAL FIELD

The present disclosure relates to the field of computer technologies, and particularly relates to the fields of big data technologies, autonomous driving technologies, intelligent transportation technologies, or the like, and more particularly to a high-precision-map data collection method and system.

### BACKGROUND

A high-precision map is also known as a high-accuracy map, and is used by an autonomous vehicle. The high-precision map has precise vehicle location information and rich road element data information, and may help an automobile to predict complex road surface information, such as a gradient, curvature, direction, or the like, so as to better avoid potential risks. The high-precision map is an important component of an autonomous driving technology. Map data collection is a basis of constructing the high-precision map. The map data collection is a production process of implementing data collection by a set of vehicles according to a collection plan.

In a related art, generally, every two persons use one vehicle to perform the map data collection.

### SUMMARY

The present disclosure provides a high-precision-map data collection method and system as recited in independent claim 1 and 9.

According to one aspect of the present disclosure, there is provided a data collection method, including: receiving a collection task generated by a server, where the collection task includes to-be-collected track points; generating a navigation path based on the to-be-collected track points, and displaying the navigation path; and acquiring map data collected at the to-be-collected track points when a vehicle travels based on the navigation path.

According to another aspect of the present disclosure, there is provided a data collection method, including: determining to-be-collected track points; generating a collection task based on the to-be-collected track points, where the collection task includes the to-be-collected track points; and sending the collection task to a vehicle terminal, where the collection task is used for generating a navigation path, and the navigation path is used for guiding a vehicle to travel and collect map data at the to-be-collected track points.

According to another aspect of the present disclosure, there is provided a data collection apparatus, including: a receiving module configured to receive a collection task generated by a server, where the collection task includes to-be-collected track points; a generating module configured to generate a navigation path based on the to-be-collected track points, and display the navigation path; and an acquiring module configured to acquire map data collected at the to-be-collected track points when a vehicle travels based on the navigation path.

According to another aspect of the present disclosure, there is provided a data collection apparatus, including: a determining module configured to determine to-be-collected track points; a task generating module configured to generate a collection task based on the to-be-collected track points, where the collection task includes the to-be-collected track points; and a sending module configured to send the collection task to a vehicle terminal, where the collection task is used for generating a navigation path, and the navigation path is used for guiding a vehicle to travel and collect map data at the to-be-collected track points.

According to another aspect of the present disclosure, there is provided an electronic device, including: at least one processor; and a memory connected with the at least one processor communicatively, where the memory stores instructions executable by the at least one processor to enable the at least one processor to perform the method according to any one of the above-mentioned aspects.

According to another aspect of the present disclosure, there is provided a non-transitory computer readable storage medium with computer instructions stored thereon, where the computer instructions are used for causing a computer to perform the method according to any one of the above-mentioned aspects.

According to another aspect of the present disclosure, there is provided a computer program product including a computer program which, when executed by a processor, implements the method according to any one of the above-mentioned aspects.

According to another aspect of the present disclosure, there is provided an autonomous vehicle, including the electronic device according to any one of the above-mentioned aspects.

The technical solution according to the present disclosure may improve a data collection efficiency.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present disclosure. In the drawings,
Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure;
Fig. 4 is a schematic diagram according to a fourth embodiment of the present disclosure;
Fig. 5 is a schematic diagram according to a fifth embodiment of the present disclosure;
Fig. 6 is a schematic diagram according to a sixth embodiment of the present disclosure;
Fig. 7 is a schematic diagram according to a seventh embodiment of the present disclosure;
Fig. 8 is a schematic diagram according to an eighth embodiment of the present disclosure;
Fig. 9 is a schematic diagram according to a ninth embodiment of the present disclosure; and
Fig. 10 is a schematic diagram of an electronic device configured to implement a map data collection method according to embodiments of the present disclosure.

### DETAILED DESCRIPTION

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

In a related art, generally, every two persons use one vehicle to perform map data collection. One person is responsible for driving the vehicle, and the other person is responsible for planning a driving path and supervising a collection state. The method has a high cost and a low efficiency, and also has a collection missing problem.

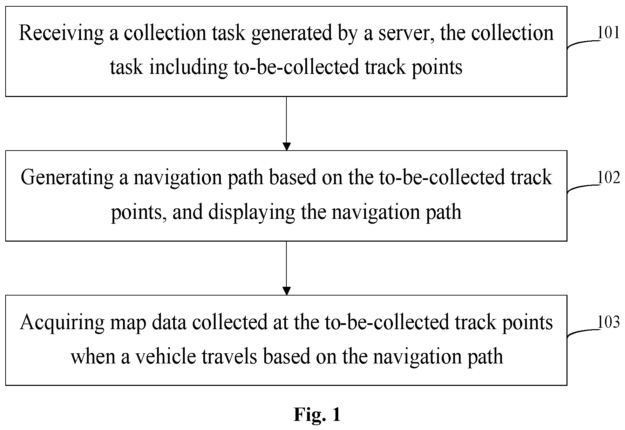

Fig. 1 is a schematic diagram according to a first embodiment of the present disclosure, and this embodiment provides a data collection method, including:
101: receiving a collection task generated by a server, where the collection task includes to-be-collected track points.
102: generating a navigation path based on the to-be-collected track points, and displaying the navigation path.
103: acquiring map data collected at the to-be-collected track points when a vehicle travels based on the navigation path.

An execution subject of this embodiment may be a data collection apparatus, and the apparatus may be software, hardware, or a combination of software and hardware. The apparatus may be located in an electronic device. The electronic device may be a user terminal, and the user terminal may include a mobile device (such as a mobile phone and a tablet computer), a vehicle-mounted terminal (such as an in-vehicle infotainment system), or the like.

Taking the in-vehicle infotainment system as an example, the in-vehicle infotainment system means an in-vehicle infotainment product mounted in a vehicle, and information communication between persons and vehicles and between vehicles and the outside (vehicles and vehicles) may be realized functionally by the in-vehicle infotainment system.

The in-vehicle infotainment system may communicate with the server by a client installed on the in-vehicle infotainment system, and the client mounted on the in-vehicle infotainment system may be called a vehicle terminal.

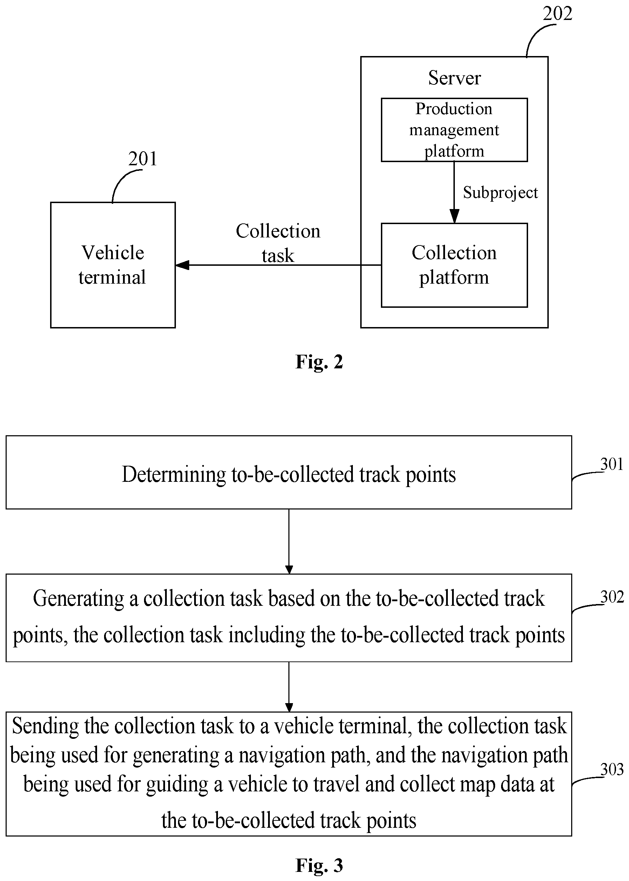

As shown in Fig. 2, the server 202 may specifically include a collection platform and a production management platform, the production management platform may generate a data collection subproject (subproject for short) and send the subproject to the collection platform, and the collection platform may generate the collection task based on the subproject and send the collection task to the vehicle terminal 201. The vehicle terminal 201 may generate the navigation path based on the collection task, and guide the vehicle to travel based on the navigation path.

The to-be-collected track points are track points where map data is to be collected, and may be appointed by a collector; for example, after logging in the collection platform, the collector appoints the to-be-collected track points in the collection task when the collection task is generated; usually, there are multiple to-be-collected track points, and the collector may also appoint a collection sequence of the multiple to-be-collected track points; for example, in the order of collection, the to-be-collected track points include point A, point B, point C, or the like.

After the collection task is acquired, the navigation path may be generated based on the to-be-collected track points in the collection task. Specifically, the collector receives the collection task on the vehicle terminal, and after the collection task is selected to be executed, the vehicle terminal may respond to an execution instruction of the collection task to generate the navigation path, and the navigation path is displayed to the collector on a display interface of the vehicle terminal.

The collection task may include the collection sequence of the to-be-collected track points, and the navigation path between every two points may be generated sequentially; for example, a starting point of the vehicle is represented by point O, and assuming that the to-be-collected track points are point A, point B and point C in sequence, the navigation paths between OA, between AB, and between BC are generated sequentially.

The navigation path between every two points may be implemented based on a related technology; for example, the vehicle terminal may send a navigation path planning request to a server of a map APP, and the server of the map APP may plan the navigation path between the two points based on the related technology and feed the navigation path back to the in-vehicle infotainment system.

After the navigation path is displayed by the vehicle terminal to the collector, the collector may control the vehicle to travel along the navigation path based on the navigation path.

When the vehicle reaches the to-be-collected track point, corresponding map data may be collected.

The collection task may also include a sensor type, and a corresponding sensor is selected to collect data based on the sensor type; for example, if the sensor type means a laser radar, a laser radar is used for collecting data, such as a point cloud of the surrounding environment collected by the laser radar; or, if the sensor type means a camera, a camera is used to collect data, such as pictures of the surrounding environment collected by the camera, or the like. It may be understood that there may exist one or more sensor types, such that one or more sensors may be used for data collection, thereby obtaining one or more types of map data.

In the technical solution of the present disclosure, the collection, storage, usage, processing, transmission, provision, disclosure, or the like, of involved user personal information are in compliance with relevant laws and regulations, and do not violate public order and good customs.

In the embodiment of the present disclosure, the collection task of the server is received, the navigation path is generated based on the collection task, and no specially-assigned person is required to plan the navigation path, thereby realizing a one-vehicle and one-person data collection method, and improving a data collection efficiency.

In some embodiments, the method further includes: thinning the map data to obtain thinned data; and saving the thinned data.

The thinning operation means that the map data is selected at intervals, such that a data size of the selected map data is less than that of the original map data; for example, the original map data includes: map data at point A, map data at point B, map data at point C and map data at point D, and the thinned data may include: the map data at point A and the map data at point C.

The thinned data may be saved after acquired. For example, the thinned data may be saved in a memory, such as a double data rate (DDR) synchronous dynamic random access memory, or a non-volatile memory, such as an embedded multimedia card (eMMC).

By thinning the map data, a storage capacity may be reduced, and complete data may not be saved, thereby improving data confidentiality, and guaranteeing data safety.

In some embodiments, the method further includes:
displaying the collected track points on the navigation path in a specific manner.

The specific manner is a preset display manner, for example, highlighted display.

For example, after collection of the map data at point A is completed, point A may be displayed in a highlighted manner.

The collected track points are displayed in the specific manner, such that the collector may know collected information visually, and subsequent processing operations of the collector are facilitated.

In some embodiments, the collection task is generated based on a subproject range of the data collection subproject, and the method further includes: generating a collected track based on the collected track points; and uploading the collected track to the server, where the collected track is used for updating the subproject range in the server.

The data collection subproject may be generated by the server, each subproject corresponds to one subproject range, and the subproject range may be a certain administrative region, a certain polygonal region, or the like. The server may also have road network data, thereby obtaining road network data in the subproject range.

A road network refers to a network in a certain region in which various roads are interconnected and interlaced into mesh distribution. The road network data is used for describing the road network, and may include road data in the corresponding road network.

The collected track points may be connected into the collected track after obtained, and the collected track is matched with the road in the subproject range; for example, the subproject range initially includes road X, road Y and road Z, and assuming that the collected track is matched with road X, the subproject range may be updated to road Y and road Z. When the collected track is matched with the road, various related technologies may be used for the matching operation; for example, if the collected track is located in a certain road, the road is used as the matched road.

By generating the collected track and updating the subproject range based on the collected track, effectiveness of the subproject range may be improved, and then, the collection task may be updated.

Execution at the vehicle terminal is taken as an example for the description above, and for an execution flow of the server, reference may be made to the following embodiments.

Fig. 3 is a schematic diagram according to a third embodiment of the present disclosure, and this embodiment takes the execution at the server as an example, and provides a data collection method, including:
301: determining to-be-collected track points.
302: generating a collection task based on the to-be-collected track points, where the collection task includes the to-be-collected track points.
303: sending the collection task to a vehicle terminal, where the collection task is used for generating a navigation path, and the navigation path is used for guiding a vehicle to travel and collect map data at the to-be-collected track points.

An execution subject of 301 to 303 may be a collection platform of the server specifically.

A collector may appoint the to-be-collected track points; for example, the collection platform may receive a data collection subproject, the subproject may include a subproject range (for example, a certain administrative region), and the collector may appoint the to-be-collected track points in the subproject range.

In the embodiment of the present disclosure, the collection task is sent to the vehicle terminal, such that the navigation path may be generated by the vehicle terminal based on the collection task, and no specially-assigned person is required to plan the navigation path, thereby realizing a one-vehicle and one-person data collection method, and improving a data collection efficiency.

Further, the collector appoints the to-be-collected track points, and individual requirements of the collector may be met.

In some embodiments, the method further includes:
displaying selectable data collection subprojects;
selecting a to-be-adopted data collection subproject from the selectable data collection subprojects, where the to-be-adopted data collection subproject includes a subproject range; and
displaying the subproject range of the to-be-adopted data collection subproject.

For example, the selectable data collection subprojects include: subproject-1, subproject-2, subproject-3, or the like, and the selectable subprojects may be displayed; the collector may select one subproject from the multiple selectable data collection subprojects as the to-be-adopted data collection subproject according to personal requirements, for example, selects subproject-1 as the to-be-adopted data collection subproject.

Each subproject may correspond to a respective subproject range; for example, the subproject range of subproject-1 is region-1, the subproject range of subproject-2 is region-2, or the like, and when subproject-1 is the to-be-adopted data collection subproject, region-1 may be displayed, such that the collector may appoint the to-be-collected track points in region-1.

By displaying the selectable data collection subproject, the selectable subproject may be provided for the collector, and by displaying the subproject range, the collector may appoint the to-be-collected track points in the subproject range.

The above operation of displaying the selectable data collection subproject and the subproject range may also be performed by the collection platform of the server specifically.

In some embodiments, the method further includes:
creating a data collection project based on a data collection requirement of a demander, where the data collection project includes a project range;
dividing the project range into multiple subproject ranges; and
generating the selectable data collection subproject based on the subproject range.

The operations of creating the data collection project (project for short) and dividing the project into the subprojects may be performed by a production management platform in the server.

The demander may provide the data collection requirement; for example, map data of a certain city (such as city Q) is required to be collected, the production management platform may create a data collection project corresponding to city Q, and a project range is a geographic region range of city Q.

The project range may be divided after determined by the production management platform; for example, the geographic region range of city Q is divided according to administrative regions, and the whole geographic region range of city Q is divided into region Q1, region Q2, or the like.

Corresponding to each subproject range (such as Q1 and Q2), a corresponding subproject may be generated; for example, a subproject corresponding to Q1, a subproject corresponding to Q2, or the like, are generated, and the subprojects may be provided for the collector as the selectable subprojects.

By dividing the project range, data collection may be carried out on a subproject basis, thereby improving flexibility and feasibility.

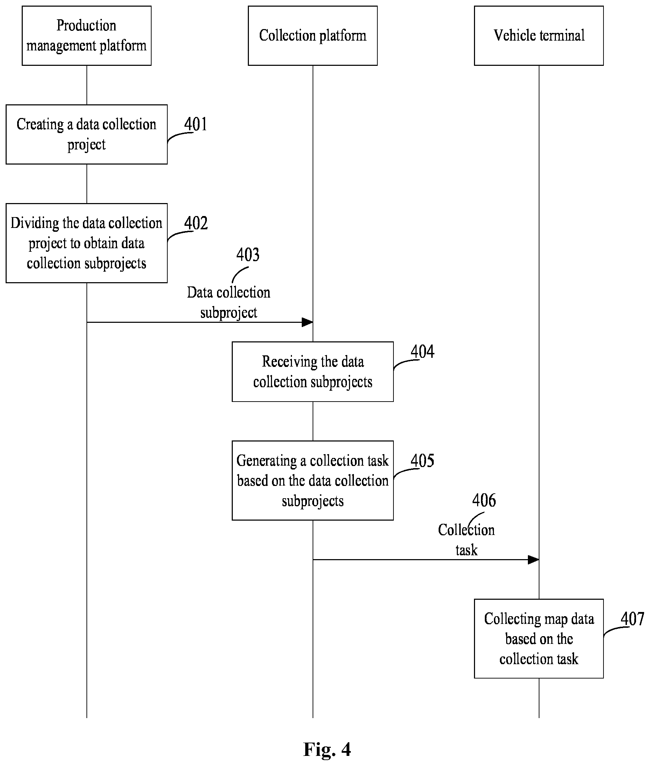

Fig. 4 is a schematic diagram according to a fourth embodiment of the present disclosure, this embodiment provides a data collection method and takes interaction between the server and the vehicle terminal as an example, the server includes a production management platform and a collection platform, and the method includes:
401: creating a data collection project by the production management platform.
402: dividing the data collection project by the production management platform to obtain data collection subprojects.
403: sending the data collection subprojects to the collection platform by the production management platform.
404: receiving the data collection subprojects by the collection platform.
405: generating a collection task by the collection platform based on the data collection subprojects.
406: sending the collection task to the vehicle terminal by the collection platform.
407: collecting map data by the vehicle terminal based on the collection task.

In order to simplify the description, for example, the data collection project is referred to as the project for short, and the data collection subproject is referred to as the subproject for short for description.

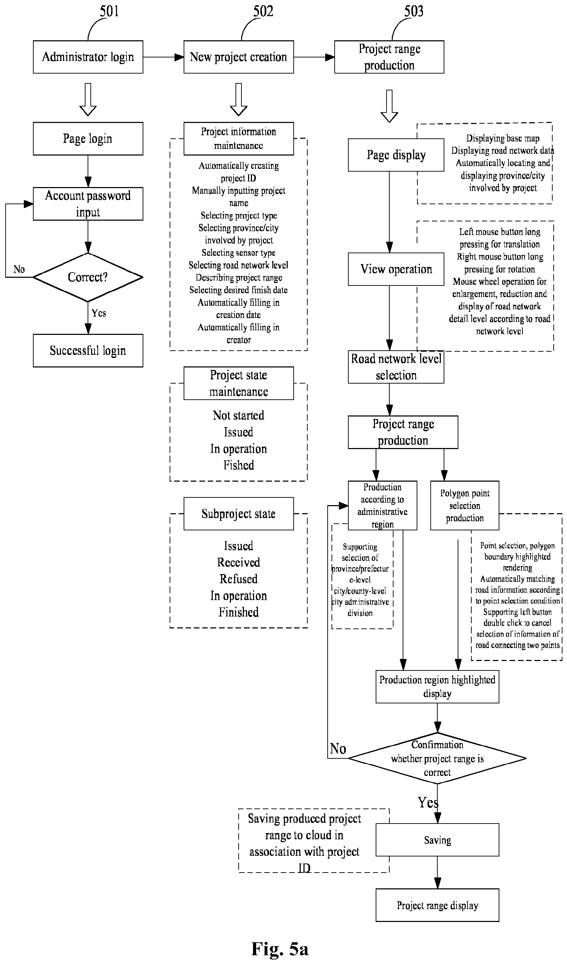

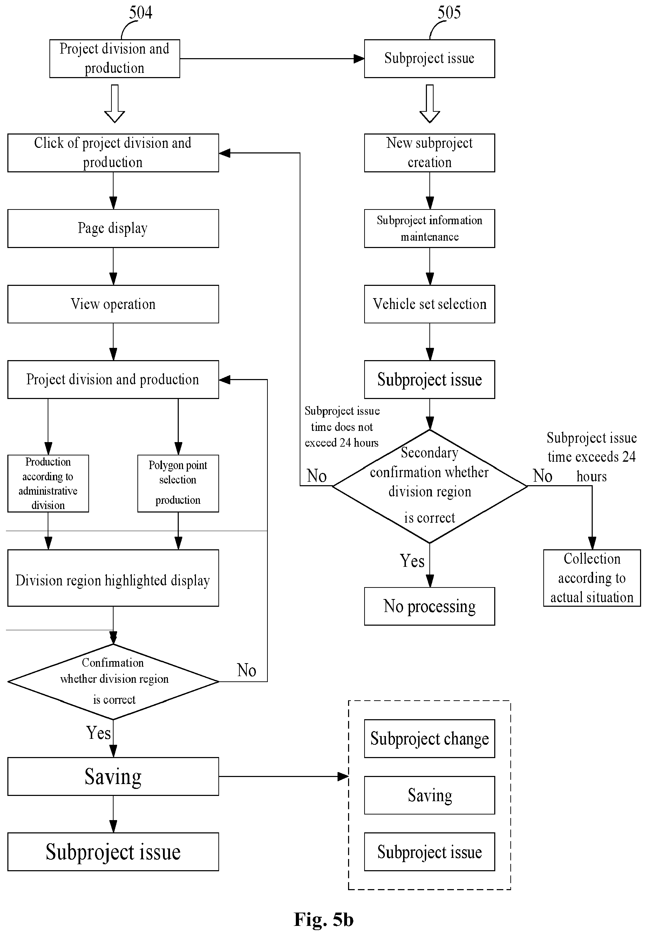

Specifically, as shown in Figs. 5a to 5b, the production management platform may perform the following operations:
501: administrator login.
502: new project creation.
503: project range production.
504: project division and production.
505: subproject issue.

An administrator is a user of the production management platform, and after login, may create the project and divide the project to obtain the subprojects.

For specific execution content of each step, reference may be made to Figs. 5a to 5b.

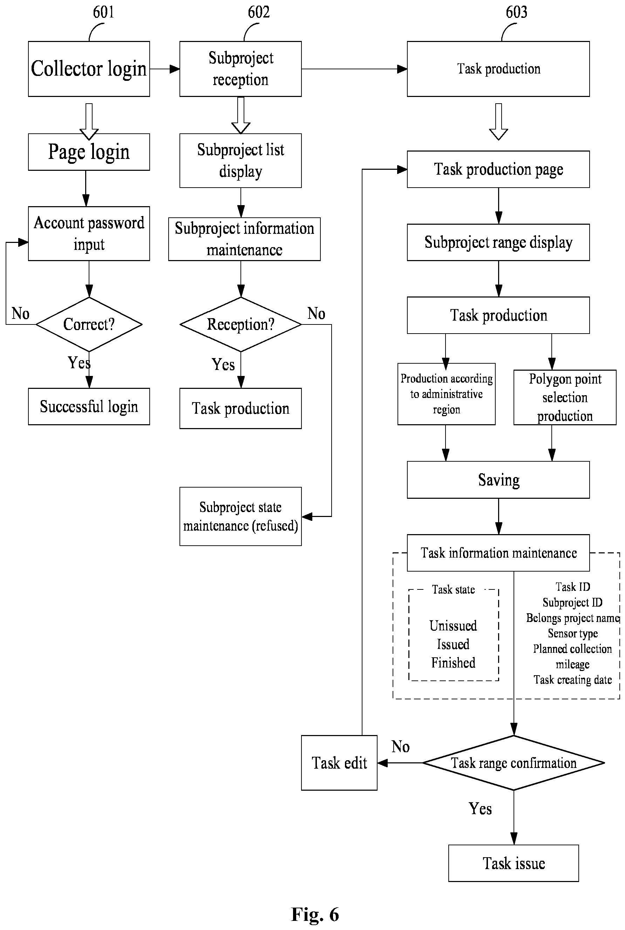

Specifically, as shown in Fig. 6, the collection platform may perform the following operations:
601: collector login.
602: subproject reception.
603: task production.

A collector is a user of the collection platform, and after login, may receive the subproject; that is, at this point, the received subproject is used to indicate the subproject selected by the collector from the multiple selectable subprojects.

For specific execution content of each step, reference may be made to Fig. 6.

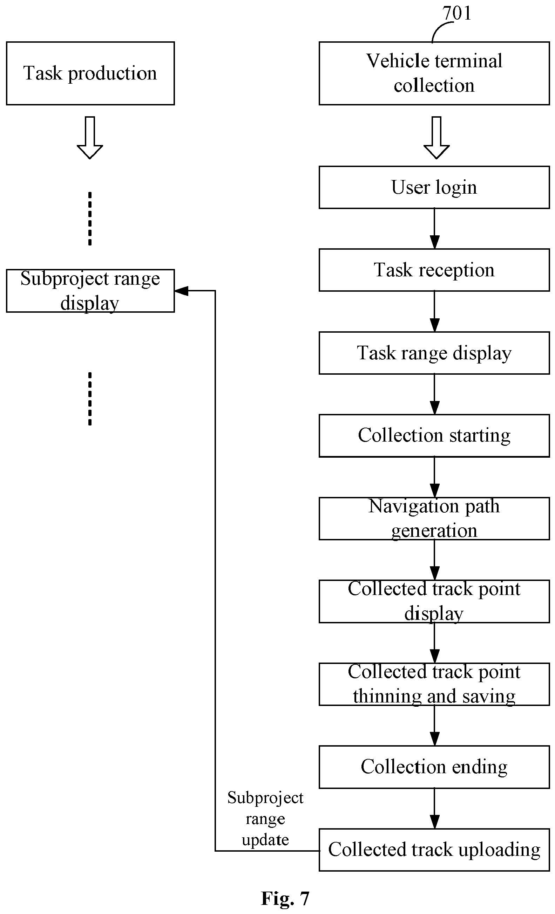

Specifically, as shown in Fig. 7, the vehicle terminal may perform the following operation:
701: vehicle terminal collection.

Execution content of vehicle terminal collection may be shown in 101 to 103, and the specific execution content may be shown in Fig. 7.

In this embodiment, the server may generate the project, the subproject and the collection task based on road network data of the server, and the road network data is not required to be sent to a navigator of the vehicle, such that offline circulation of the road network data may be avoided, and risks may be managed and controlled. The vehicle terminal may generate the navigation path based on the collection task, and manual navigation is not required, thereby reducing a cost and improving an efficiency. The map data of the to-be-collected track points is obtained, and the collected track points are displayed, thus avoiding collection missing.

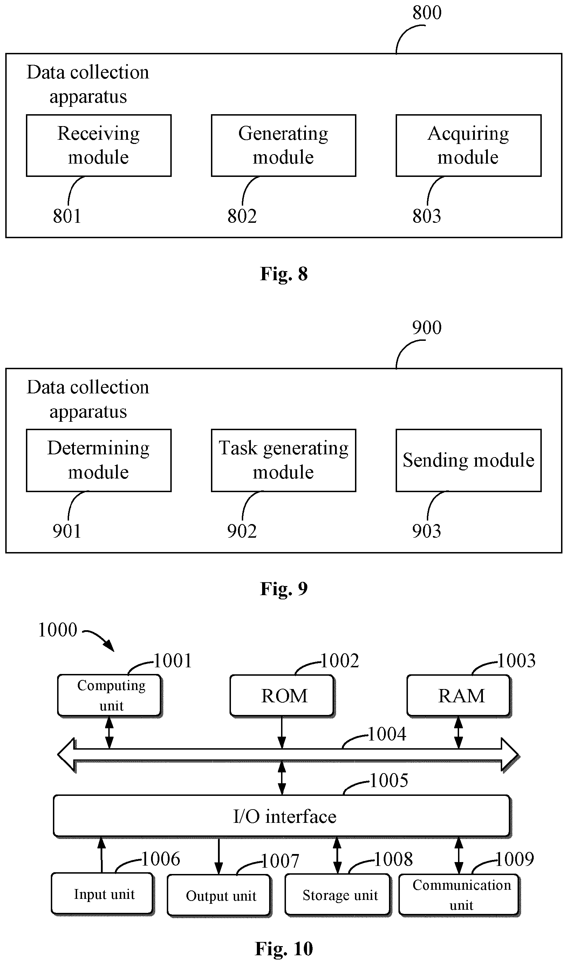

Fig. 8 is a schematic diagram according to an eighth embodiment of the present disclosure, which provides a data collection apparatus. As shown in Fig. 8, the apparatus 800 includes: a receiving module 801, a generating module 802 and an acquiring module 803.

The receiving module 801 is configured to receive a collection task generated by a server, where the collection task includes to-be-collected track points; the generating module 802 is configured to generate a navigation path based on the to-be-collected track points, and display the navigation path; and the acquiring module 803 is configured to acquire map data collected at the to-be-collected track points when a vehicle travels based on the navigation path.

In some embodiments, the apparatus 800 further includes: a thinning module configured to thin the map data to obtain thinned data; and a saving module configured to save the thinned data.

In some embodiments, the apparatus 800 further includes: a displaying module configured to display the collected track points on the navigation path in a specific manner.

In some embodiments, the collection task is generated based on a subproject range of the data collection subproject, and the apparatus further includes: an updating module configured to generate a collected track based on the collected track points; and upload the collected track to the server, where the collected track is used for updating the subproject range in the server.

In the embodiment of the present disclosure, the collection task of the server is received, the navigation path is generated based on the collection task, and no specially-assigned person is required to plan the navigation path, thereby realizing a one-vehicle and one-person data collection method, and improving a data collection efficiency.

Fig. 9 is a schematic diagram according to an eighth embodiment of the present disclosure, which provides a data collection apparatus. As shown in Fig. 9, the apparatus 900 includes: a determining module 901, a task generating module 902 and a sending module 903.

The determining module 901 is configured to determine to-be-collected track points; the task generating module 902 is configured to generate a collection task based on the to-be-collected track points, where the collection task includes the to-be-collected track points; and the sending module 903 is configured to send the collection task to a vehicle terminal, where the collection task is used for generating a navigation path, and the navigation path is used for guiding a vehicle to travel and collect map data at the to-be-collected track points.

In some embodiments, the determining module 901 is specifically configured to: acquire to-be-collected track points appointed by a collector in a subproject range.

In some embodiments, the apparatus 900 further includes: a first displaying module configured to display selectable data collection subprojects; a selecting module configured to select a to-be-adopted data collection subproject from the selectable data collection subprojects, where the to-be-adopted data collection subproject includes a subproject range; and a second displaying module configured to display the subproject range of the to-be-adopted data collection subproject.

In some embodiments, the apparatus 900 further includes: a creating module configured to create a data collection project based on a data collection requirement of a demander, where the data collection project includes a project range; a dividing module configured to divide the project range into multiple subproject ranges; and a subproject generating module configured to generate the selectable data collection subproject based on the subproject range.

In the embodiment of the present disclosure, the collection task is sent to the vehicle terminal, such that the navigation path may be generated by the vehicle terminal based on the collection task, and no specially-assigned person is required to plan the navigation path, thereby realizing a one-vehicle and one-person data collection method, and improving a data collection efficiency.

It may be understood that in the embodiments of the present disclosure, mutual reference may be made to the same or similar contents in different embodiments.

It may be understood that "first", "second", or the like, in the embodiments of the present disclosure are only for distinguishing and do not represent an importance degree, a sequential order, or the like.

In the technical solution of the present disclosure, the collection, storage, usage, processing, transmission, provision, disclosure, or the like, of involved user personal information are in compliance with relevant laws and regulations, and do not violate public order and good customs.

According to the embodiment of the present disclosure, there are also provided an electronic device, a readable storage medium and a computer program product. The present disclosure further provides an autonomous vehicle, including the above-mentioned electronic device.

Fig. 10 shows a schematic block diagram of an exemplary electronic device 1000 which may be configured to implement the embodiment of the present disclosure. The electronic device is intended to represent various forms of digital computers, such as laptop computers, desktop computers, workstations, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 10, the electronic device 1000 includes a computing unit 1001 which may perform various appropriate actions and processing operations according to a computer program stored in a read only memory (ROM) 1002 or a computer program loaded from a storage unit 1008 into a random access memory (RAM) 1003. Various programs and data necessary for the operation of the electronic device 1000 may be also stored in the RAM 1003. The computing unit 1001, the ROM 1002, and the RAM 1003 are connected with one other through a bus 1004. An input/output (I/O) interface 1005 is also connected to the bus 1004.

The multiple components in the electronic device 1000 are connected to the I/O interface 1005, and include: an input unit 1006, such as a keyboard, a mouse, or the like; an output unit 1007, such as various types of displays, speakers, or the like; the storage unit 1008, such as a magnetic disk, an optical disk, or the like; and a communication unit 1009, such as a network card, a modem, a wireless communication transceiver, or the like. The communication unit 1009 allows the electronic device 1000 to exchange information/data with other devices through a computer network, such as the Internet, and/or various telecommunication networks.

The computing unit 1001 may be a variety of general and/or special purpose processing components with processing and computing capabilities. Some examples of the computing unit 1001 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 1001 performs the methods and processing operations described above, such as the data collection method. For example, in some embodiments, the data collection method may be implemented as a computer software program tangibly contained in a machine readable medium, such as the storage unit 1008. In some embodiments, part or all of the computer program may be loaded and/or installed into the electronic device 1000 via the ROM 1002 and/or the communication unit 1009. When the computer program is loaded into the RAM 1003 and executed by the computing unit 1001, one or more steps of the data collection method described above may be performed. Alternatively, in other embodiments, the computing unit 1001 may be configured to perform the data collection method by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable map data collection apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A high-precision-map data collection method, comprising:
receiving (101), by a terminal, a collection task from a server, wherein the collection task comprises to-be-collected track points;
generating (102), by the terminal, a navigation path based on the to-be-collected track points, and displaying, by the terminal, the navigation path; and
acquiring (103), by the terminal, map data collected at the to-be-collected track points when a vehicle travels based on the navigation path.

2. The method according to claim 1, further comprising:
thinning, by the terminal, the map data to obtain thinned data; and
saving, by the terminal, the thinned data.

3. The method according to claim 1 or 2, further comprising:
displaying, by the terminal, collected track points on the navigation path in a specific manner.

4. The method according to claim 3, wherein the collection task is generated by the server based on a subproject range of a data collection subproject, and the method further comprises:
generating, by the terminal, a collected track based on the collected track points; and
uploading, by the terminal, the collected track to the server, the collected track being used for updating the subproject range in the server.

5. The method according to any one of claims 1 to 3, wherein the collection task is generated by:
determining (301), by the server, the to-be-collected track points;
generating (302) by the server, the collection task based on the to-be-collected track points.

6. The method according to claim 5, wherein the determining the to-be-collected track points comprises:
acquiring, by the server, the to-be-collected track points appointed by a collector in a subproject range.

7. The method according to claim 6, further comprising:
displaying, by the server, selectable data collection subprojects;
selecting, by the server, a to-be-adopted data collection subproject from the selectable data collection subprojects, wherein the to-be-adopted data collection subproject comprises the subproject range; and
displaying, by the server, the subproject range of the to-be-adopted data collection subproject.

8. The method according to claim 7, further comprising:
creating, by the server, a data collection project based on a data collection requirement of a demander, wherein the data collection project comprises a project range;
dividing, by the server, the project range into multiple subproject ranges; and
generating, by the server, the selectable data collection subproject based on the subproject ranges.

9. A high-precision-map data collection system, comprising a terminal, and the terminal comprising:
at least one processor; and
a memory connected with the at least one processor communicatively;
wherein the memory stores instructions executable by the at least one processor to enable the terminal to perform the following operations:
receiving (101) a collection task from a server, wherein the collection task comprises to-be-collected track points;
generating (102) a navigation path based on the to-be-collected track points, and displaying the navigation path; and
acquiring (103) map data collected at the to-be-collected track points when a vehicle travels based on the navigation path.

10. The system according to claim 9, wherein the terminal is enabled to further perform the following operations:
thinning the map data to obtain thinned data; and
saving the thinned data.

11. The system according to claim 9 or 10, wherein the terminal is enabled to further perform the following operations:
displaying collected track points on the navigation path in a specific manner.

12. The system according to claim 11, wherein the terminal is enabled to further perform the following operations:
generating a collected track based on the collected track points; and
uploading the collected track to the server.

13. The system according to any one of claims 9-12, further comprising the server, wherein the server comprising:
at least one processor; and
a memory connected with the at least one processor communicatively;
wherein the memory stores instructions executable by the at least one processor to enable the server to perform the following operations:
acquiring the to-be-collected track points appointed by a collector in a subproject range; and
generating the collection task based on the to-be-collected track points.

14. The system according to claim 13, wherein the server is enabled to further perform the following operations:
displaying selectable data collection subprojects;
selecting a to-be-adopted data collection subproject from the selectable data collection subprojects, wherein the to-be-adopted data collection subproject comprises the subproject range; and
displaying the subproject range of the to-be-adopted data collection subproject.

15. The method according to claim 14, wherein the server is enabled to further perform the following operations:
creating a data collection project based on a data collection requirement of a demander, wherein the data collection project comprises a project range;
dividing the project range into multiple subproject ranges; and
generating the selectable data collection subproject based on the subproject ranges.
